# EUROPEAN PATENT SPECIFICATION

(11) **EP 0 801 660 B1**
(45) Date of publication and mention of the grant of the patent: **04.10.2001**
(21) Application number: 95907992.2
(22) Date of filing: 06.01.1995
(51) Int. Cl.: C08G 18/08, C08J 9/00, C08J 9/02

(54) **EXTRUDED POLYMER FOAM WITH FILLER PARTICLES AND METHOD**
EXTRUDIERTER POLYMERSCHAUM MIT FÜLLSTOFFTEILCHEN UND VERFAHREN
MOUSSE POLYMERE EXTRUDEE COMPORTANT DES PARTICULES DE CHARGE ET PROCEDE AFFERENT

(43) Date of publication of application: 22.10.1997
(73) Proprietor: APACHE PRODUCTS COMPANY, Meridian, MS 39302 (US)
(72) Inventor: BURGESS, James, H., Meridian, MS 39307 (US); GLORIOSO, Sammie, J., Ridgeland, MS 39157 (US)
(74) Representative: Boydell, John Christopher
(86) International application number: PCT/US95/00175
(87) International publication number: WO 96/20966

(56) References cited:
- DE-A- 2 707 026
- GB-A- 1 559 909
- US-A- 4 795 763
- US-A- 5 137 930
- US-A- 5 149 722
- US-A- 5 192 607
- US-A- 5 373 026
- CHEMICAL ABSTRACTS, vol. 109, no. 12, 19 September 1988 Columbus, Ohio, US; abstract no. 94146, PEREPELKINA, N. K. ET AL: "Rigid filled polyurethane foam with lowered flammability for building structures" XP002053017 & PLAST. MASSY (1988), (6), 61-3 CODEN: PLMSAI;ISSN: 0554-2901, 1988,

## Description

### Field Of The Invention

The invention relates to foamed polymer material, methods for producing polymer foams, and, particularly, to a method for extruding polymer foam material, such as polyisocyanurate and polyurethane foams, using a screw-type extruder. The extruded polymer foams contain substantial amounts of filler particles.

### Background Of The Invention

Polymer foams, such as polyisocyanurate and polyurethane foams, have not previously been able to be produced using an extruder. The foaming material "firms" in the extruder and blocks the equipment. Additionally, use of filler materials has been limited using conventional methods to produce foam sheets.

U.S. Patent No. 3,466,705, (Richie) describes an apparatus for extruding foamable thermoplastic material, such as polystyrene, preferably in tubular form. Richie discloses that the apparatus can be used for thermosetting materials, such as polyurethanes, but that steam or hot water would have a damaging effect and therefore are not used. A foam-augmenting gas such as freon is used as the foaming agent. Richie use an expansion space of transverse cross-sectional area which increases in size gradually in the direction of travel of the extruded product.

U.S. Patent No. 5,149,722 (Soukup) and U.S. Patent No. 4,795,763 (Gluck) describes the use of about 1-10% by weight of carbon black as a filler material. Gluck specifically recites the problem of cell rupture which can occur with the addition of too much filler materials.

The present invention seeks to provide an improved method for preparing a thermosetting polymer foam product.

In accordance with the invention there is provided a method for preparing a thermosetting polymer foam product characterised by:
introducing polyol to a screw of an extruder;
introducing isocyanate to the screw of the extruder;
mixing the polyol and the isocyanate in the screw of the extruder;
introducing foaming agent to the screw of the extruder;
introducing catalyst to the extruder at a position proximate to the extruder head of the extruder;
mixing the catalyst with the foaming agent, the isocyanate and the polyol in the extruder to form a composite mixture, thereby reacting the isocyanate and polyol and initiating a foaming reaction in the composite mixture in the extruder in conjunction with extrusion whereby expansion of the composite mixture into a foam takes place outside the extruder.

The method of the invention may be further characterised by introducing filler particles chosen from a group including aluminum trihydrate, perlite, carbon black, diatomaceous earth, polyiso powders, barium sulfate, calcium silicate, and calcium carbonate to the screw of the extruder for inclusion in the composite mixture.

The polymer foam product may include high levels of filler material, such as 15%-20% by weight filler particles, or higher. Polyisocyanurate or polyurethane foam is made using a screw-type extruder for mixing the components of the composition. Isocyanate and polyol are introduced into the screw of the extruder. Filler particulars are also introduced in the extruder screw. The isocyanate, polyol, and filler particles are mixed together with a foaming agent and, optionally, a surfactant with the extruder to produce a high quality dispersion. The mixture is cooled via a cooling manifold of the screw extruder and the addition of the various components in the mixture. Cooling inhibits reaction of the mixed components within the screw.

Catalyst is added and mixed with the composite mixture formed in the extruder screw as a final mixing step. After the catalyst is introduced, the mixture is almost immediately extruded onto a conveyer so that the firming occurs outside of the extruder to avoid clogging. The mixture is foamed and firmed on the conveyor in a conventional manner and, preferably, formed into a continuous flat sheet which is thereafter to produce board of standard sizes.

The filler particles included in the thermoset foams produced in accordance with the invention maintain the mechanical or insulative characteristics of the resultant extruded foam as compared to the properties of the extruded foam without filler particles. However, with some fillers improved characteristics result. For example, carbon black can improve the insulation properties of the foam as set forth in the Soukup and Gluck patents, supra. Overall, the addition of filler particles make the resultant foam more economical to produce and the process enables the use of more filler materials in the production of suitable foam board insulation.

Different filler particles can be used in the same foam. For example, carbon black and another type filler particle, which is less expensive, can be used to gain the insulative effect of the carbon black while increasing costs savings. Aluminum trihydrate, perlite and calcium carbonate are preferred filler materials, used either as the sole filler material or with carbon black. Other filler materials include carbon black, diatomaceous earth, polyiso powder, and barium sulfate and calcium silicate. The filler particles added to the polyol/isocyanate mixture in the extruder reduce the cost of the resultant extruded thermoset foam, since the filler particles are lower in cost than polyol and/or polyisocyanate.

The filler particles and/or dispersant and/or foaming agent and/or surfactant may be mixed with the isocyanate or with the polyol before introduction thereof to the extruder screw. If multiple fillers are used, they can be mixed prior to entering the extruder screw or can be introduced, simultaneously or separately, into the extruder screw and mixed therein. Entry of the filler particles, or a filler particle mixture can occur simultaneously or separately from entry of dispersing agent and/or surfactant and/or the polyol and/or the isocyanate.

The foaming agent, which is preferably a hydrochlorofluorocarbon (HCFC) or water, is preferably introduced directly into the extruder or may be mixed with one of the components, preferably the polyol, before introduction thereof to the extruder screw. If water is the foaming agent, the water is vaporised for foaming the mixture and reacts with the isocyanate to form carbon dioxide, which further foams the mixture. Other foaming agents may alternatively be used.

Foam cell size is generally decreased when extruder speed is increased.

### Brief Description of the Drawings:

Figure 1 is a schematic illustration of an apparatus for extruding polymer foam onto a conveyor;
Figure 2 is a schematic illustration of an extruder for an integrated process including preparation of a polymer premix before extruding the polymer mixture for foaming;
Figure 3 is a cross-sectional view of a preferred extruder outlet;
Figure 4 is a front elevational view of the outlet shown in Figure 3.

### Detailed Description of the Invention:

Thermosetting foams, such as polyisocyanurate or polyurethane foams, are made using an extruder for mixing the foamable mixture before extruding onto a belt conveyor. Through such a continuous process, thermosetting foams are made much faster than previously possible without any decrease in quality. Additionally, the process enables the dispersion of filler particles with the polymer mixture to produce foams which include 12-50% by weight or more filler particles thereby reducing the production cost of the thermoset foams.

The extruder enhances the dispersion of the polymer mixture. A twin-screw extruder is preferred. However, a single screw extruder with multiple mixing sections can also be used. The extruder can process materials for making a thermosetting polymer, such as an isocyanate polymer, in a controlled manner with independent catalyst addition and variable reactivity. High quality filler particle dispersions in isocyanate or polyol media are obtained. These dispersions exceed 8 on the Hegman scale. Moreover, higher levels of filler particles can be handled than on conventional foam mixing equipment.

The foams may be blown with blowing agents such as hydrochlorofluorocarbons (HCFC), CFC, HFC, HC and/or water which produces CO₂. Typical examples of hydrochlorofluorocarbon blowing agents are HCFC 141b and HCFC 22 which can be advantageously combined in preferred proportions. High viscosity isocyanates and polymer premix, which cannot be processed using a conventional Kady mill and conventional foam mixing equipment, may be used in the process described.

The extruder is cooled downstream of the dispersion section of the extruder to prevent premature reaction of the foam ingredient. The low torque requirements permit use of virtually any size extruder. Flocculation of filler particle/polyol dispersions can be avoided by maintaining a high shear rate on the dispersion, through the foaming section, producing a foam with excellent filler particle dispersion.

In general, the quality of the dispersion increases with increased filler particle loading and with viscosity of the starting medium. Addition of the polyol or isocyanate in the dispersion section may be accomplished in several staged injections. This is preferred for keeping the viscosity and shear high enough to ensure a high quality dispersion.

The preferred dispersions were obtained when the charge of filler particles was added with the first injection of the dispersion medium to form a mixture. The final preferred filler percentage of 15% to 20% was then obtained by subsequent liquid injections in the dispersion section of the extruder. Maximum temperatures of about 50°C. in the dispersion section do not present an operational problem. The dispersion is actively cooled by cold water circulating in the barrel jackets and screws and passively cooled by injection of the remaining foam ingredients into the dispersion.

A preferred extruder screw speed to provide a good foam mix is about 300-600 rpm. Speeds may range to 1000 rpm or higher. For extended use at high speed, a special hardening treatment is advantageously used on the screw element in the dispersion section due to the abrasiveness of the filler particles. Throughput is a function of both screw speed and extruder size. A desired throughput for a 30-40mm extruder is about 204-272 kg./hr. (450-600 lb./hr).

One method of extruding polyisocyanurate foam includes adding a blend of isocyanate, and filler particles at a first position of the extruder, adding polyol blend to mix with the isocyanate blend at a second position of the extruder closer to the extrusion position than the first position, adding catalyst blend to the mixed polyol and isocyanate blend at a third position of the extruder proximate the extrusion position, and extruding the catalyzed mixture onto a belt conveyor for foaming.

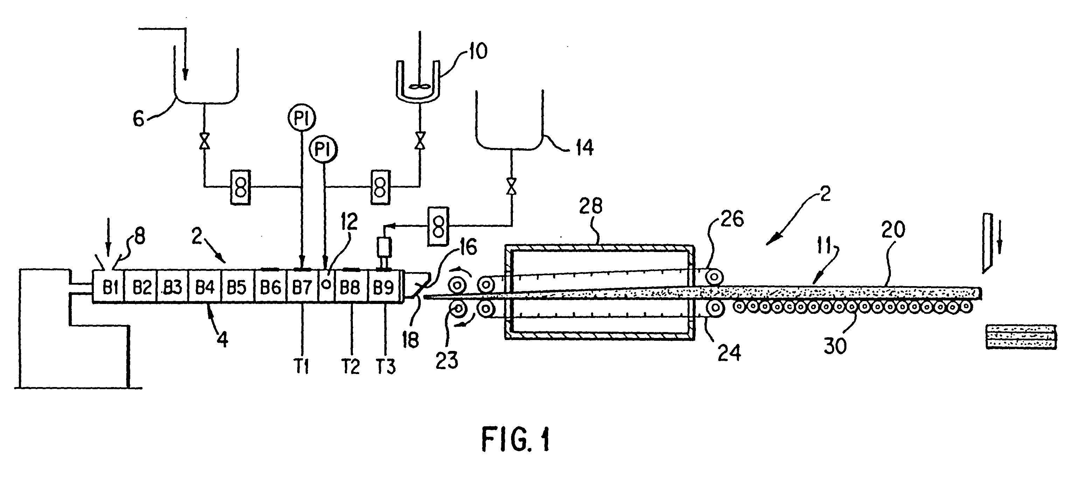

With reference to Figure 1, an extruder apparatus **2** suitable for practicing the invention is illustrated. The apparatus **2** includes an extruder **4** which has barrels, **B1-B9.** A single or twin screw extruder may be used. A twin screw extruder provides better mixing and is preferred. The barrels of the extruder are preferably separated by sheets of Graphoil paper, which aids in taking down the apparatus.

Isocyanate solution is mixed and provided to reservoir **6** having a large capacity, preferably a 113.56 litre (30 gallon) capacity. A suspension of filler particles in the isocyanate may be fed to reservoir **6** or the filler particles can be fed into barrel **B1** via a hopper **8.** Solution from reservoir **6** is fed, in a non-limiting example, to barrel **B7** of extruder **4**. Polyol is mixed with water (foaming agent), for example in Lightning mixer **10**, and fed to extruder **4** at location **12**, between barrels **B7** and **B8**. Alternatively, the isocyanate and the filler particles may be fed, for example, to hopper **8** feeding into barrel **B1,** and the isocyanate and/or filler particles mixed together in the extruder before the polyol is added.

The polyol and isocyanate containing filler particles are mixed in the extruder. Thereafter catalyst is fed from a reservoir **14** to barrel **B9** and mixed therewith. The catalyzed mixture is fed through the discharge end of the extruder onto a belt conveyor. The discharge end **16** of the extruder suitably has an inclined discharge piece **18** or a flat discharge piece (Figure 4), for directing the foam downward onto a conveying/forming apparatus **11.**

The temperature in the extruder is controlled by cooling the barrels and screws, as known in the art. Barrels **B7** through **B9** (at least) are cooled, generally by water cooling, to facilitate mixing the components of the reaction mixture without clogging the extruder.

The conveying/forming apparatus **11** includes a conveyor **20**, onto which the foam is discharged from end **16** of extruder **2**. The foam, passes between a pair of rolls **23** which rotate in opposite directions and then onto a slat conveyor **24**, **26** through a heated area **28** in which the foam rises.

Optionally the foam is introduced between upper and lower paper liners. Appropriate location of the lining paper rolls (not shown) is apparent to one skilled in the art. The resultant product is a laminated insulation sheet.

Slat conveyors typically vary from 6-30 metres (20-100 feet) in length. The slat conveyor **24** is heated to about 66°C (150°F). This portion of the conveyor is substantially closed in by enclosure **28** to conserve heat. Doors (not shown) are placed about every 3m (10 ft.) along the enclosure to allow access to the equipment. The mixture foams and firms as it passes at about 9-46 metres/min (30 to 150 ft./min). along the conveyor. The foam passes onto a roller conveyor **30** about 6-30 metres (20 to 100 ft.) in length, substantially at room temperature, for curing before being cut into panels for use. A typical apparatus of this type is shown in Gluck, U.S. Patent No. 4,795,763, discussed above.

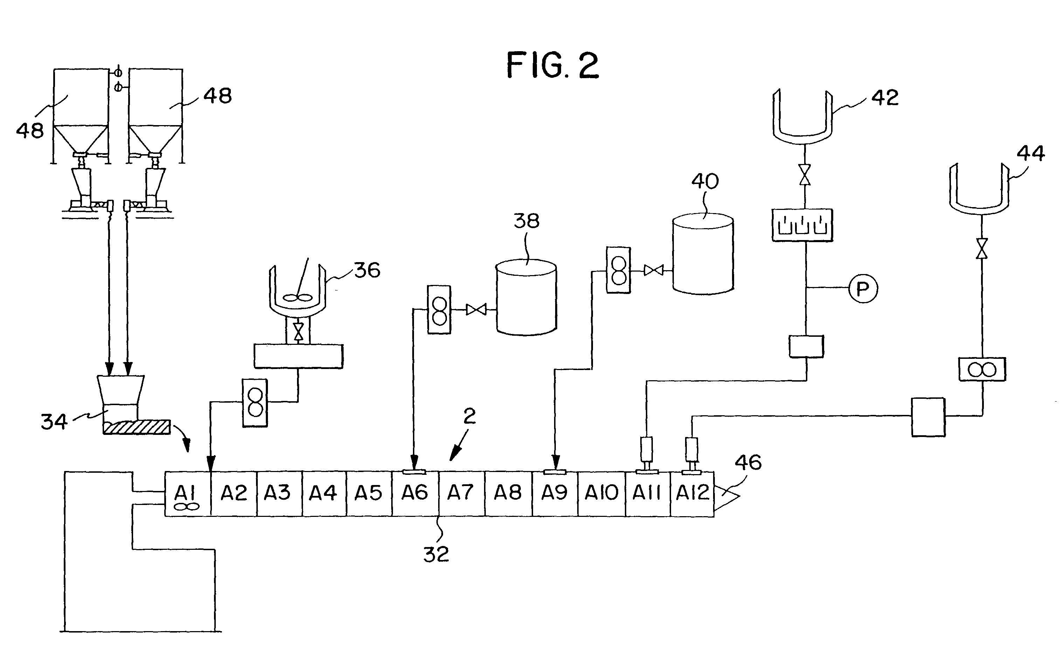

In another example, shown in Figure 2, an extruder **32** having 12 barrels **A1-A12** is used. Filler particles are fed to barrel **A1** from hopper **34,** a premix of polyol and surfactant is fed from mixer **36** between barrels **A1** and **A2** and mixed together with the filler particles in the extruder screw. The remainder of the polyol is added from a reservoir **38** to barrel **A6** and mixed with the filler particle and polyol premix. Isocyanate is fed from a reservoir **40** to barrel **A9** and mixed with the ingredients already in the screw of the extruder. In this example, hydro-chlorofluorocarbon blowing agent (HCFC-141b) is used, and is added from a reservoir **42** to barrel **A11.** Catalyst, such as potassium octoate, is added from a reservoir **44** to barrel **A12** of the extruder, and mixed into the reaction mix immediately before extrusion. The mixture is extruded from die **46** onto a conveying/forming apparatus, such as illustrated in Figure 1.

Where more than one type of filler material is to be used, separate feed bins **48** for each type of material are provided. The amount of filler fed to the hopper **34** from each bin is controlled to provide a desired proportion. A preferred combination of filler materials is carbon black and aluminum trihydrate, relative proportions are dependent upon the R value and physical properties desired. For making dispersions without foaming, the fillers are added via hopper **34** and the isocyanate is added from mixer **36** and reservoir **38**.

It is well known in the art of thermosetting foams that, in the process of making polyisocyanurate or polyurethane foams, when the mixture is prepared, there is an exothermic foaming reaction. The speed of this reaction is controllable according to the temperature at which the reaction takes place. The foaming action is described as having a "cream time," during which foaming is initiated and the material reaches a consistency of a soft creamy foam, and a "firm time" at which the foam sets up and hardens. In a typical non-limiting example, the cream time may be 7 to 12 seconds and the firm time may be 35 to 60 seconds. The properties of the product may be changed by adjusting the concentrations of the materials, temperatures of the barrels, etc.

In prior attempts to extrude thermosetting resins of this type, extrusion has not been successful because the reaction mechanism has not been controlled within the extruder and the mixture has creamed and/or foamed within the extruder and blocked the extruder, preventing extrusion.

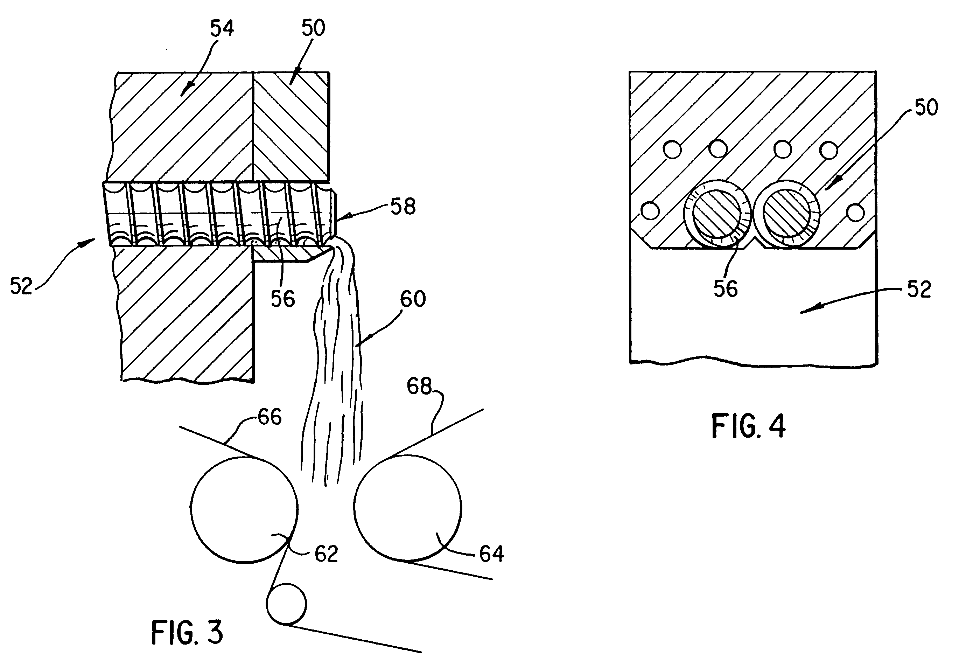

A typical extruder die which is useful in avoiding excessive build-up of foam on the die is shown in Figures 3 and 4. Discharge plate **50** of extruder **52** is attached to barrel **54**. Screw **56** has a flat tip **58** and discharged material **60** falls directly between rolls **62**,**64** carrying lining paper **66**, **68** for the conveyor (as shown in Figure 1) on which the isocyanate polymer is foamed.

In making insulation boards, the extrusion process described herein allows fast, economical production. Filler particle addition reduces the cost of the insulation boards so produced. The thermal conductivity of insulation board is reduced by adding carbon black. This advantageously reduces board thickness. The thermal conductivity of polyisocyanurate foams, based on different foaming agents, in W/m °C (BTU in/ft² h °F), are as follows:-

| | |
|---|---|
| isocyanurate HCFC | 0.017 (0.12) |
| isocyanurate/carbon black/HCFC | 0.013-0.014 (0.09-0.1) |
| isocyanurate/water | 0.020-0.027 (0.14-0.19) |
| isocyanurate/carbon black/water | 0.019-0.025 (0.135-0.17) |
| isocyanurate/carbon black/HCFC/water | 0.013-0.019 (0.09-0.135) |

Use of HCFC (hydrochlorofluorocarbon) foaming agent advantageously reduces the foam's thermal conductivity. Carbon black also reduces the thermal conductivity, compensating for increased thermal conductivity when water is the foaming agent. The formulation may also include inorganic flame retardants. Inorganic flame retardants increase the isocyanurate and polyol components' viscosities. A screw extruder allows thorough mixing of higher viscosity components with better dispersion for use of higher percentage of filler materials. The mix is discharged from the extruder prior to the start of the firming reaction.

A filler particle dispersion may be made in the extruder using the filler particles, carbon black, optional surfactant and isocyanate or polyol. Dispersions may be used immediately or stored for future use. Isocyanate dispersions are preferred where storage is intended, since polyol dispersions tend to become less dispersed when stored.

### Examples 1 to 33

### Carbon black dispersion made in the extruder screw

Table 1 shows the composition used for each formulation and Table 2 shows the composition of each polyol premix, used as indicated in Table 1. Pelron P-344 dispersant and Cabot Black Pearls 280 carbon black were used in all the examples. The catalyst was a 3:1 blend, by weight, of potassium octoate and DMP-30. A catalyst blend of 3:1 to 6:1 may be used. The ratio of the catalyst blend is dependent upon how close the catalyst is added to the extruder outlet. The average equivalent weight of BASF 226 prepolymer (polymer/isocyanate mix) and ICI high viscosity isocyanate is about 152.

The operating run schedule is shown in Table 3 and operating parameters of the extruder are shown in Table 4. The torque developed was higher for the carbon black dispersions when compared with the white controls, but was still very low relative to the capabilities of the extruder, and is not a limiting factor. Exit temperatures of the foam mix are shown to be a function of the level of carbon black and the original viscosity of the dispersion medium. The preferred exit temperature is about 25° to 32°C.

Table 5 shows properties of selected test foams.

### Example 34

| **Carbon black dispersion made outside the extruder screw** | | |
|---|---|---|
| Component A | Polymeric methyldiisocyanate (MDI) | 91% |
| | carbon black (viscosity: 20,000 cps) (dispersion quality: Hegman bar - 50 microns) | 9% |
| Component B | polyol | 91% |
| | silicone surfactant | 5% |
| | water | 4% |
| Component C | preblended catalyst (potassium octoate) | 2% |

Components A, B and C were mixed in the percentage ratio A:B:C of 74:24:2, by weight.

**Table 1**

| Formulation | Component | Parts by Weight | % | Index | % Trimer |
|---|---|---|---|---|---|
| I | Premix I | 40.6 | 11.8 | 2.74 | 12.4 |
| | 2852E Polyol | 59.4 | 17.2 | | |
| | MR-200 Isocyanate | 192.0 | 55.7 | | |
| | Catalyst | 7.5 | 2.2 | | |
| | HCFC - 6.35 Kg (14 lb) | 45.0 | 13.1 | | |
| II | Premix II | 40.6 | 11.2 | 2.93 | 12.8 |
| | Carbon Black (C/B) | 17.4 | 4.8 | | |
| | 2852E Polyol | 59.4 | 16.4 | | |
| | MR-200 Isocyanate | 192.0 | 53.0 | | |
| | Catalyst | 7.5 | 2.1 | | |
| | HCFC - 6.35 Kg (14 lb) | 45.0 | 12.4 | | |
| III | Premix III | 63.5 | 17.0 | 3.00 | 12.9 |
| | Carbon Black (C/B) | 27.2 | 7.3 | | |
| | 2852E Polyol | 36.5 | 9.8 | | |
| | MR-200 Isocyanate | 192.0 | 51.5 | | |
| | Catalyst | 7.5 | 2.0 | | |
| | HCFC - 6.35 Kg (14 lb) | 46.3 | 12.4 | | |
| IV | Premix IV | 40.6 | 11.5 | 2.97 | 12.7 |
| | Carbon Black (C/B) | 17.4 | 4.9 | | |
| | 2852E Polyol | 50.0 | 14.2 | | |
| | Isocyanate (ICI, or BASF 226 Prepolymer) | 192.0 | 54.5 | | |
| | Catalyst | 7.5 | 2.1 | | |
| | HCFC - 6.35 Kg (14 lb) | 45.0 | 12.8 | | |

**Table 2**

| Polyol Premix | I | | II | | III | | IV | |
|---|---|---|---|---|---|---|---|---|
| | pbw | % | pbw | % | pbw | % | pbw | % |
| 2852E Polyol | 37.1 | 91.4 | 33.9 | 83.5 | 55.0 | 86.6 | 33.9 | 83.5 |
| Y10222 Surfactant | 3.5 | 8.6 | 3.5 | 8.6 | 3.5 | 5.5 | 3.5 | 8.6 |
| P-344 Dispersant | - | - | 3.2 | 7.9 | 5.0 | 7.9 | 3.2 | 7.9 |

**Table 3 -**

| RUN SCHEDULE | | | |
|---|---|---|---|
| Run No. | Formulation | Foam Type | Key Variable |
| 1 | I | White Control | Density Check 1.65 |
| 2 | I | White Control | Lower 6.35 Kg (14 lb) 1.67 |
| 3 | I | White Control | Higher 6.35 Kg (14 lb) 1.51 |
| 4 | II | Black Control | Hegman 7 |
| 5 | II | Black Control | Lower 6.35 Kg (14 lb) |
| 6 | II | Black Control | ISO Adjustment |
| 7 | II | Black Control | Mix/Rate Study @ 600 RPM |
| 8 | II | Black Control | Mix/Rate Study @ 500 RPM |
| 9 | II | Black Control | Mix/Rate Study @ 600 RPM |
| 10 | III | Black Control | Mix/Rate Study @ 600 RPM |
| 11 | III | Black Control | Mix/Rate Study @ 500 RPM |
| 12 | III | Black Control | Mix/Rate Study @ 500 RPM |
| 13, 13A | IV | Black, Prepol. | Mix @ 500 RPM, 13A Higher ISO |
| 14 | IV | Black, Prepol. | Mix @ 600 RPM |
| 15 | IV | Black, Prepol. | Mix/Rate Study @ 600 RPM |
| 16 | IV | Black, Prepol. | Mix/Rate Study @ 500 RPM |
| 17 | IV | Black, Prepol. | Mix/Rate Study @ 500 RPM |
| 18 | IV | Black, ICI | Mix @ 500 RPM |
| 19 | IV | Black, ICI | Mix @ 600 RPM |
| 20 | IV | Black, ICI | Catalyst Adjustment |
| 21 | IV | Black, ICI | 6.35 Kg (14 lb) Adjustment |
| 22 | IV | Black, ICI | 6.35 Kg (14 lb) Adjustment |
| 23 | IV | White, Prepol. | Control |
| 24 | IV | Black, Prepol. | Prepol + C/B |
| 25 | IV | Black, Prepol. | Higher C/B @ 500 RPM |
| 26 | IV | Black, Prepol. | Higher C/B @ 600 RPM |
| 27 | IV | Black, Prepol. | Low Rate, Low on Matl. |
| 28 | IV | White Control | ICI High Visc. ISO |
| 29 | IV | Black Control | Std. % C/B |
| 30 | IV | Black Control | Higher C/B |
| 31 | IV | Black Control | Higher C/B |
| 32 | IV | Black Control | Higher C/B |
| 33 | IV | White Control | R-22 Froth |

**Table 4 -**

| OPERATING PARAMETERS | | | | | | |
|---|---|---|---|---|---|---|
| Run No. | RPM | % Torque | Kg/hr (lbs/hr) | Exit Temp. °C | % C/B | Foam Quality |
| 1 | 500 | 5.1 | 136 (300) | 28 | 0 | Good |
| 2 | 500 | 5 | 136 (300) | 27 | 0 | Good |
| 3 | 500 | 4.9 | 136 (300) | 28 | 0 | Good |
| 4 | 500 | 16 | 136 (300) | 27 | 4.8 | Good |
| 5 | 500 | 15.9 | 136 (300) | 28 | 4.8 | Good |
| 6 | 500 | 15.8 | 136 (300) | 28 | 4.8 | Good |
| 7 | 600 | 15.2 | 136 (300) | 29 | 4.8 | Good |
| 8 | 500 | 17.7 | 181 (400) | 29 | 4.8 | Good |
| 9 | 600 | 16.4 | 181 (400) | 29 | 4.8 | Good |
| 10 | 600 | 16.7 | 204 (450) | 29 | 7.3 | Good |
| 11 | 500 | 22 | 204 (450) | 29 | 7.3 | Good |
| 12 | 500 | 24 | 181 (400) | 29 | 7.3 | Good |
| 13 | 500 | 14.3 | 136 (300) | 30, 31 | 4.8 | Good, Sl. Soft |
| 14 | 600 | 13.7 | 136 (300) | 33 | 4.8 | Fair |
| 15 | 600 | 16.1 | 204 (450) | 35 | 4.8 | Fair |
| 16 | 500 | 16.8 | 204 (450) | 34 | 4.8 | Fair |
| 17 | 500 | 21.0 | 272 (600) | 32 | 4.8 | Fair |
| 18 | 500 | 20.6 | 136 (300) | 31 | 4.8 | V. Good |
| 19 | 600 | 19.8 | 136 (300) | 32 | 4.8 | V. Good |
| 20 | 600 | 18.0 | 136 (300) | 32 | 4.8 | V. Good |
| 21 | 600 | 17.6 | 136 (300) | 33 | 4.8 | V. Good |
| 22 | 600 | 17.4 | 136 (300) | 32 | 4.8 | V. Good |
| 23 | 500 | 7.0 | 136 (300) | 7 | 4.8 | V. Good |
| 24 | 500 | 14.0 | 136 (300) | 14 | 4.7 | V. Good |
| 25 | 500 | 27.0 | 136 (300) | 27 | 7 | V. Good |
| 26 | 600 | 24.8 | 136 (300) | 25 | 7 | V. Good |
| 27 | 600 | 24.0 | 86 (190) | 24 | 7 | V. Good |
| 28 | 500 | 6.4 | 136 (300) | 34 | 0 | V. Good |
| 29 | 600 | 13.5 | 136 (300) | 37 | 4.7 | V. Good |
| 30 | 600 | 14.7 | 204 (450) | 34 | 7 | V. Good |
| 31 | 600 | 29.0 | 136 (300) | 39 | 7 | V. Good |
| 32 | 600 | 27.6 | 136 (300) | 40 | 7 | V. Good |
| 33 | 600 | 26 | 136 (300) | 33 | 0 | V. Good |

**Table 5**

| Run No. | k-Init. W/m°C (BTU in/ft²h °F) | k-Aged W/m °C (BTU in/ft²h °F) | % Closed cell | % Friability | Density |
|---|---|---|---|---|---|
| 1 | 0.0196 (.136) | - | - | - | 1.62 |
| 2 | 0.0202 (.140) | - | - | - | 1.69 |
| 4 | - | 0.0241 (.167) | 79 | 29 | |
| 7 | 0.0185 (.128) | - | - | - | |
| 9 | 0.0179 (.124) | - | - | - | |
| 10 | 0.0189 (.131) | - | - | - | |
| 12 | 0.0193 (.134) | - | - | - | |
| 13 | - | 0.0203 (.141) | 81 | 8 | |
| 13A | - | 0.0196 (.136) | 81 | 13 | |
| 14 | 0.0177 (.123) | - | - | - | |
| 15 | 0.0175 (.121) | 0.0209 (.145) | 86 | 12 | |
| 16 | - | 0.0199 (.138) | 85 | 13 | |
| 17 | - | 0.0213 (.148) | 87 | 35 | |
| 18 | - | 0.0224 (.155) | 85 | 18 | |
| 19 | 0.0177 (.123) | 0.0211 (.146) | - | - | |
| 20 | - | 0.0211 (.146) | 86 | 20 | |
| 21 | 0.0185 (.128) | - | - | - | |
| 22 | 0.0200 (.139) | - | - | - | |
| 23 | 0.0190 (.132) | 0.0200 (.139) | 84 | 8 | |
| 28 | - | 0.0215 (.149) | 90 | 20 | |
| 29 | - | 0.0190 (.132) | - | - | |
| 33 | - | 0.0255 (.177) | 81 | 12 | |

Using apparatus of Figure 1, the process was started by injecting component A into barrel B7 until it was observed exiting the extruder. Component B was then injected to the spacer between barrels B7 and B8, followed by injection of catalyst to barrel B9. Shutdown was performed in reverse order. The machine was purged with methylene chloride.

The product had a compression strength of 179 kPa (26 psi), a density of 36.8 Kg/m³ (2.3 Ib./cu. ft.) and a K factor (thermal conductivity) of 0.0242 W/m °C. (0.168 BTU/sq. ft. /°F).

When the machine was taken apart, it was easy to remove the barrels separated by Graphoil paper. The internal surfaces of the barrel in the process section were coated with a thin hard layer of cured material but this was readily removable.

Substantially higher concentration of isocyanate (component A) leads to hard and brittle foam. Substantially higher concentration of polyol (component B) leads to rubbery, soft foam and increased exotherm of reaction.

As the speed of the machine is increased, the cell size of the foam is decreased. Variation of these parameters to provide foam having certain characteristics will be apparent to one skilled in the art.

### Example 35

| **Carbon black dispersion made in the extruder screw** | | |
|---|---|---|
| Component A | polymeric methyldiisocyanate (MDI) | 100.00 parts |
| | carbon black | 9.29 parts |
| | dispersant | 1.93 parts |
| | surfactant | 1.7parts |

Using apparatus of Figure 1, the process was started by injecting the ingredients for component A into barrel **B7** until it was observed exiting the extruder. The dispersion produced was of better quality than that produced in a Kady mill and registered more than 8 on the Hegman scale.

In a further embodiment of the invention, polyisocyanurate bunstock may be made using an extruder. The bun is cut from an extrudate which is passed from the die of the extruder to a conveyor belt having release-coated paper liners on the top, bottom and sides. A kraft paper liner having a polymer coating is suitable for use as a release paper. A 6 metre (20 ft.) conveyor may be used, moving at about 2.7 to 3 metres/min. (9 to 10 ft./min.). The bunstock may be from 102 mm (4 in.) to 609 mm (2 ft.) or more in thickness. The foam is warm as it exits the extruder and is allowed to cure for 4 to 6 days. In a typical example of making bunstock on an extruder, the following formulation was used:-

### Example 36

### Bunstock made in the Extruder

| Material | ppm |
|---|---|
| Isocyanate (Miles - Mondur MR) | 101 |
| Polymer resin (Iso-Shield - P101) | 78 |
| R-11 (Atochem - Isotron 11 or 141B) | 13.81 |
| Catalyst #1 (Air Products - TMR-3) | 1.17 |
| Catalyst #2a (Air Products - DMEA) | .312 |
| Catalyst #2b (Ashland - DEG) | .312 |

The foam was extruded from a die of an extruder, having a large cross-section, as shown in Figures 3 and 4, onto a conveyor lined with paper on the top, bottom and sides, to form bunstock having dimensions of about 686 mm (27") high x 1308 mm (51½") wide. The cream time was 28 sec., the gel time was 2 min. 34 sec., the rise time was 3 min. 55 sec., and the tack free time was 4 min. 31 sec. The conveyor speed was about 2.7 to 3 metres/min. (9 to 10 ft./min.). Bunstock may be extruded at a speed of about 91 Kg/min. (200 lb./min.). A typical bun may be about 686 mm (27") x 1308 mm (51½") x 3 metres (10 ft.) in size and may be cut to smaller blocks, as required. Different levels of carbon black may be used, providing different K-values.

The extruder may alternatively be used to make the filler particle dispersion only, which is then fed to a tank for storage and later use.

When the extruder is used for making both the dispersion and the foam, the cream time and gel time are relatively slow due to the size of the bunstock. The bunstock which is liquid at extrusion onto the conveyor, is firm after reaching the end of the conveyor and being released from the paper liners. The process described allows for large volume bunstock to be made, of very high quality.

### Examples 37-48

### High Filler Particle Content Foam

A number of examples of foams having a high filler particle content were produced using the process explained in conjunction with Figure 2 above.

Table 6 presents the various formulations of materials which were used in the examples and Tables 7a and 7b provide a tabulation of the characteristics of the resultant thermoset foam. The examples illustrate how polymer foams can be made using the extrusion process which can contain in excess of 15% filler material.

Test runs were conducted using a ZSK-40 extruder having a 40mm wide extruder. Depending upon the type and size of the sheet to be produced, larger capacity extruders are used for commercial production such as extruders having diameters 58mm, 70mm, 92mm, or 120mm. Table 8 provides ranges of preferred processing rates for the various size extruders.

**Table 6**

| FORMULATION | | A | | B | | C | | D | | E | |
|---|---|---|---|---|---|---|---|---|---|---|---|
| | | pbw | % | pbw | % | pbw | % | pbw | % | pbw | % |
| Polyol | Cape 254C | 100 | 24.8 | 100 | 26 | 100 | 22.8 | 100 | 22.6 | 100 | 22.7 |
| Surfactant | D.C. 9342 | 3 | 0.8 | 3 | .78 | 2 | .5 | 2 | .5 | 2 | .5 |
| Blowing Agent | Water | 0.5 | 0.1 | 0.5 | .13 | 1.40 | .3 | 1.40 | .3 | 1.40 | .3 |
| | Forane 14 lb | 47.5 | 11.8 | 38 | 9.9 | 43 | 9.8 | 47 | 10.6 | 40 | 9.1 |
| | HCFC 22 | 0 | 0 | 0 | 0 | 0 | 0 | 0 | 0 | 6 | 1.4 |
| Catalyst | TMR-30 | 0.84 | .2 | 0.45 | .12 | 0.96 | .2 | 1.25 | .3 | 1.25 | .3 |
| | OMG 977 | 2.51 | 0.6 | 2.2 | .58 | 2.65 | .6 | 3.40 | .8 | 3.40 | .8 |
| | Polycat 46 | 0.54 | 0.1 | 0.39 | .11 | 0.57 | .1 | 0.65 | .2 | 0.65 | .2 |
| Filler | Alumina Trihydrate | 76 | 19 | 72.27 | 18.7 | 0 | 0 | 0 | 0 | 77.40 | 17.6 |
| | Calcium Carbonate | 0 | 0 | 0 | 0 | 73.80 | 16.8 | 0 | 0 | 0 | 0 |
| | Non-expanded Perlite | 0 | 0 | 0 | 0 | 0 | 0 | 77.80 | 17.6 | 0 | 0 |
| ISOCYANATE | | 171.84 | 42.7 | 168.4 | 44 | 214.19 | 48.8 | 208.45 | 47.2 | 208.45 | 47.3 |

**Table 7a**

| EXAMPLE | 37 | 38 | 39 | 40 | 41 | 42 |
|---|---|---|---|---|---|---|
| Formulation Type | A | A | A | A | B | B |
| Iso Index | 2.30 | 2.50 | 2.50 | 2.50 | 2.50 | 2.20 |
| Average Thickness | 38.86mm (1.53") | 39.62mm (1.56") | 39.62mm (1.56") | 53.85mm (2.12") | 32.51 mm (1.28") | 36.58mm (1.44") |
| Board Density Kg/m³ (Ib/ft³) | 36.68 (2.29) | 39.25 (2.45) | 40.69 (2.54) | 33.48 (2.09) | 45.33 (2.83) | 39.72 (2.48) |
| Core Density Kg/m³ (lb/ft³) | 33.64 (2.10) | 38.28 (2.39) | 38.28 (2.39) | 29.79 (1.86) | 41.81 (2.61) | 34.76 (2.17) |
| K-Value W/m °C (BTU in/ft² h °F) | 0.0199 (0.138) | 0.0196 (0.136) | 0.0199 (0.138) | 0.0195 (0.135) | 0.0192 (0.133) | 0.0187 (0.13) |
| Compressive | 154.51Kpa (22.41psi) | 135.14Kpa (19.6psi) | 182.30Kpa (26.44psi) | 133.34Kpa 19.34psi) | 224.91Kpa (32.62psi) | 209.60Kpa (30.4psi) |
| % Closed Cell | 82.00% | 84.20% | 83.30% | 83.30% | 81.00% | 77.30% |
| Hot Dip | good | good | good | good | good | good |
| Cold Aging (% shrink) machine/crosscut | 0.00%/ 0.42% 0.42% | 0.58%/ 0.00% 0.00% | 0.42%/ 0.00% 0.00% | 0.00%/ 0.00% 0.00% | 0.00%/ 0.00% 0.00% | 0.00%/ 0.00% 0.00% |
| Humid Aging (% growth) machine/crosscut | 0.93%/ 0.45% | 0.37%/ 0.69% | 0.37%/ 0.45% | 0.56%/ 0.00% | 0.37%/ 0.34% | 0.37%/ 0.34% |

**Table 7b**

| EXAMPLE | 43 | 44 | 45 | 46 | 47 | 48 |
|---|---|---|---|---|---|---|
| Formulation Type | C | C | D | D | E | E |
| Iso Index | 2.60 | 2.60 | 2.50 | 2.50 | 2.50 | 2.50 |
| Average Thickness | 33.78mm (1.33") | 63.5mm (2.50") | 36.58mm (1.44") | 61.72mm (2.43") | 36.58mm (1.44") | 62.00mm (2.44") |
| Board Density Kg/m³ (lb/ft³) | 38.76 (2.42) | 37.32 (2.33) | 38.12 (2.38) | 37.32 (2.33) | 46.29 (2.89) | 31.88 (1.99) |
| Core Density Kg/m³ (lb/ft³) | 36.52 (2.28) | 36.52 (2.28) | 34.28 (2.14) | 34.28 (2.14) | 41.49 (2.59) | 29.79 (1.86) |
| K-Value W/m °C (BTU in/ft² h °F) | 0.0203 (0.141) | 0.0203 (0.141) | 0.0199 (0.138) | 0.0195 (0.135) | 0.0199 (0.138) | 0.0193 (0.134) |
| Compressive | 100.66Kpa (14.6psi) | 124.11Kpa (18.0psi) | 151.96Kpa (22.04psi) | 150.44Kpa (21.82psi) | 155.13Kpa (22.50psi) | 142.45Kpa (20.66psi) |
| % Closed Cell | 81.13% | 82.17% | 83.37% | 82.00% | 84.19% | 82.63% |
| Hot Dip | good | good | good | good | good | good |
| Cold Aging (% shrink) machine/crosscut | 0.00%/ 0.00% | 0.09%/ 0.12% | 0.17%/ 0.00% | 0.11%/ 0.08% | 0.00%/ 0.00% | 0.08% 0.00% |
| Humid Aging (% growth) machine/crosscut | 0.06%/ 0.17% | 0.12%/ 0.11% | 0.06%/ 0.12% | 0.13%/ 0.17% | 0.00%/ 0.00% | 0.06& 0.17% |

**Table 8**

| Extruder Output Ranges¹ | | | | | |
|---|---|---|---|---|---|
| Extruder | ZSK-40 | ZSK-58 | ZSK-70 | ZSK-92 | C-120 |
| High Range | | | | | |
| Kg/hr (lbs/hr) | 204 (450) | 612 (1350) | 1093 (2411) | 2495 (5500) | 5511 (12150) |
| Kg/min (lbs/min) | 3.4 (7.5) | 10.2 (22.5) | 18 (40) | 42 (92) | 91.9 (202.5) |
| Low Range | | | | | |
| Kg/hr (lbs/hr) | 272 (600) | 816 (1800) | 1458 (3215) | 3311 (7300) | 7348 (16200) |
| Kg/min (lbs/min) | 4.5 (10) | 13.6 (30) | 24.5 (54) | 55 (122) | 122 (270) |
| Metres/min (ft/min) | - | 10-13.4 (33-44) | 17.7-23.8 (58-78) | 40.8-53.9 (134-177) | 84-119 (276-391) |

| | | | | | |
|---|---|---|---|---|---|
| ¹ Calculated for 25.4mm (1") thick foam product 645mm (49") wide and 32Kg/m³ (2.0 lbs/cu.ft.) in-place density. | | | | | |

## Claims

1. A method for preparing a thermosetting polymer foam product **characterized by**:
introducing palyol to a screw of an extruder (4) ;
introducing isocyanate to the screw of the extruder;
mixing the polyol and the isocyanate in the screw of the extruder;
introducing foaming agent to the screw of the extruder;
introducing catalyst to the extruder at a position proximate to the extruder head of the extruder;
mixing the catalyst with the foaming agent, the isocyanate and the polyol in the extruder to form a composite mixture, thereby reacting the isocyanate and polyol and initiating a foaming reaction in the composite mixture in the extruder in conjunction with extrusion whereby expansion of the composite mixture into a foam takes place outside the extruder.

2. A method according to claim 1 further **characterized by** introducing filler particles chosen from a group including aluminum trihydrate, perlite, carbon black, diatomaceous earth, polyiso powders, barium sulfate, calcium silicate, and calcium carbonate to the screw of the extruder for inclusion in the composite mixture.

3. A method according to claim 2 further **characterized by** mixing the filler particles with the isocyanate to prepare a particle/isocyanate mixture before introducing the particle/isocyanate mixture to the screw of the extruder.

4. A method according to claim 2 further **characterized by** mixing finely divided carbon black with the isocyanate and filler particles to form a carbon/particle/isocyanate mixture before introducing the carbon/particle/isocyanate mixture so formed to the screw of the extruder.

5. A method according to claim 1 further **characterized by** mixing surfactant with the polyol to prepare a surfactant/polyol mixture before introducing the surfactant/polyol mixture so formed to the screw of the extruder.

6. A method according to claim 5 further **characterized by** mixing dispersant with the polyol and surfactant to prepare a dispersant/surfactant/polyol mixture before introducing the dispersant/surfactant/polyol mixture so formed to the screw of the extruder.

7. A method according to claim 2 **characterized in that** finely divided carbon black is mixed with the filler particles to_ prepare a filler particle/carbon black mixture before introducing the filler particle/carbon black mixture to the screw of the extruder.

8. A method according to claim 1 **characterized in that** the foaming agent is chosen from the group consisting of hydrochlorofluorocarbon (HCFC), HC, HFC, CFC and water.

9. A method according to claim 8 **characterized in that** the foaming agent comprises water and HCFC.

10. A method according to claim 2 **characterized in that** said filler particles comprise at least 12% by weight of said thermoset polymer foam.

11. A method according to claim 2 **characterized in that** said filler particles comprise from 15-50% by weight of said thermoset polymer foam.

12. A method according to claim 2 **characterized in that** said filler particles are introduced at a first position in the extruder, a premix of said polyol and a surfactant is mixed with said filler particles at a second position in the extruder, additional polyol is mixed at a third position in the extruder downstream from said second position, said isocyanate is introduced at a fourth position in the extruder downstream from the third position, said foaming agent is introduced at a fifth position in the extruder downstream from the fourth position, and said catalyst is introduced at a sixth position downstream from said fifth position in the extruder.

13. A method according to claim 2 **characterized in that** said polyol and filler particles are added at a first position of the extruder, said isocyanate is added at a second position of the extruder, downstream of the first position, said foaming agent is added to the extruder at a third position, downstream of the second position, and said catalyst is added to the mixed polyol, filler particles, isocyanate and foaming agent at a fourth position of the extruder proximate the extrusion die to form a catalyzed mixture, and extruding the catalyzed mixture so formed for foaming.

14. A method according to claim 1 **characterized by** cooling the composite mixture before extruding to maintain temperature below 50°C.

15. A method according to claim 1 **characterized in that** the extruder is a twin screw extruder and is operated at 300-600 rpm.

16. A method according to claim 1 wherein the catalyst is introduced into a barrel (A12) of the extruder adjacent the extruder head (A46).

17. A method according to claim 1 further **characterized by** the step of laminating the extruded composite mixture between an upper paper liner and a lower paper liner and thereby forming a laminated insulation sheet.

## Patentansprüche

1. Verfahren zum Herstellen eines hitzehärtbaren Polymerschaumprodukts, **dadurch gekennzeichnet, dass**
Polyol in eine Schnecke eines Extruders (4) eingeführt wird,
Isocyanat in die Schnecke des Extruders eingeführt wird,
das Polyol und das Isocyanat in der Schnecke des Extruders gemischt werden, Schaummittel in die Schnecke des Extruders eingeführt wird,
ein Katalysator in den Extruder an einer Stelle unmittelbar am Extruderkopf des Extruders eingeführt wird,
der Katalysator mit dem Schaummittel, dem Isocyanat und dem Polyol im Extruder zur Bildung eines Verbundgemisches gemischt wird, wodurch das Isocyanat und
das Polyol miteinander reagieren und eine Schäumungsreaktion in dem Verbund-gemisch im Extruder in Verbindung mit der Extrusion eingeleitet wird, wobei eine Expansion des Verbundgemisches in einen Schaum außerhalb des Extruders erfolgt.

2. Verfahren nach Anspruch 1, **dadurch gekennzeichnet, dass** Füllpartikel eingeführt werden, die aus einer Gruppe ausgewählt werden, die Aluminium-Trihydrat, Perlite, Ruß, Diatomeenerde, Polyiso-Pulver, Bariumsulfat, Kalziumsilikat und Kalziumkarbonat in die Schnecke des Extruders eingeführt und dem Verbundgemisch beigegeben werden.

3. Verfahren nach Anspruch 2, **dadurch gekennzeichnet, dass** die Füllpartikel mit dem Isocyanat zur Herstellung eines Partikel/Isocyanat-Gemisches vor dem Einführen des Partikel/Isocyanat-Gemisches in die Schnecke des Extruders gemischt werden.

4. Verfahren nach Anspruch 2, **dadurch gekennzeichnet, dass** fein verteilter Ruß mit dem Isocyanat und Füllpartikeln zur Ausbildung eines Ruß/Partikel/lsocyanat-Gemisches gemischt werden, bevor das Ruß/Partikel/lsocyanat-Gemisch, das dabei gebildet wird, in die Schnecke des Extruders eingeführt wird.

5. Verfahren nach Anspruch 1, **dadurch gekennzeichnet, dass** ein Schaumerzeuger mit dem Polyol zur Erzielung eines Schaumerzeuger/Polyol- Gemisches gemischt wird, bevor das Schaumerzeuger/Polyol-Gemisch, das auf diese Weise gebildet wird, in die Schnecke des Extruders eingeführt wird.

6. Verfahren nach Anspruch 5, **dadurch gekennzeichnet, dass** Dispersionsmittel mit dem Polyol und Schaumerzeuger zur Herstellung eines Dispersionsmittel/ Schaumerzeuger/Polyol-Gemisches gemischt wird, bevor dieses so gebildete Gemisch in die Schnecke des Extruders eingeführt wird.

7. Verfahen nach Anspruch 2, **dadurch gekennzeichnet, dass** fein verteilter Ruß mit den Füllpartikeln zur Erzielung eines Füllpartikel/Ruß-Gemisches gemischt wird, bevor das Füllpartikel/Ruß-Gemisch in die Schnecke des Extruders eingeführt wird.

8. Verfahren nach Anspruch 1, **dadurch gekennzeichnet, dass** das Schaummittel aus der Gruppe gewählt wird, die aus Hydrochlor-Fluorkohlenstoff (HCFC), HC, HFC, CFC und Wasser besteht.

9. Verfahren nach Anspruch 8, **dadurch gekennzeichnet, dass** das Schaummittel Wasser und HCFC enthält.

10. Verfahren nach Anspruch 2, **dadurch gekennzeichnet, dass** die Füllpartikel mindestens 12 Gewichtsprozent des hitzehärtbaren Polymerschaumes aufweisen.

11. Verfahren nach Anspruch 2, **dadurch gekennzeichnet, dass** die Füllpartikel 15 bis 50 Gewichtsprozent des hitzehärtbaren Polymerschaumes aufweisen.

12. Verfahren nach Anspruch 2, **dadurch gekennzeichnet, dass** die Füllpartikel an einer ersten Stelle in den Extruder eingeführt werden, ein Vorgemisch aus dem Polyol und einem Schaumerzeuger mit den Füllpartikeln an einer zweiten Stelle im Extruder gemischt wird, zusätzliches Polyol an einer dritten Stelle im Extruder stromab in bezug auf die zweite Stelle beigegeben wird, das Isocyanat an einer vierten Stelle in den Extruder stromab in bezug auf die dritte Position eingeführt wird, das Schaummittel an einer fünften Stelle in den Extruder stromab in bezug auf die vierte Stelle eingeführt wird, und der Katalysator an einer sechsten Stelle stromab in bezug auf die fünfte Stelle im Extruder beigegeben wird.

13. Verfahren nach Anspruch 2, **dadurch gekennzeichnet, dass** das Polyol und die Füllpartikel an einer ersten Stelle des Extruders beigegeben werden, das Isocyanat an einer zweiten Stelle des Extruders stromab in bezug auf die erste Position hinzugefügt wird, das Schaummittel dem Extruder an einer dritten Stelle stromab in bezug auf die zweite Stelle hinzugegeben wird, und der Katalysator dem Gemisch aus Polyol, Füllpartikeln, Isocyanat und Schaummittel an einer vierten Stelle des Extruders in unmittelbarer Nähe des Strangpresswerkzeuges zur Ausbildung eines katalysierten Gemisches hinzugefügt wird, und das auf diese Weise gebildete, mit katalysiertem Gemisch zum Schäumen extrudiert wird.

14. Verfahren nach Anspruch 1, **dadurch gekennzeichnet, dass** das Verbund-Gemisch vor dem Extrudieren gekühlt wird, um eine Temperatur unter 50° C aufrecht zu erhalten.

15. Verfahren nach Anspruch 1, **dadurch gekennzeichnet, dass** der Extruder ein Doppelschnecken-Extruder ist und mit einer Drehzahl von 300 - 600 U/m betrieben wird.

16. Verfahren nach Anspruch 1, **dadurch gekennzeichnet, dass** der Katalysator in eine Trommel (A12) des Extruders in der Nähe des Extruderkopfes (A46) eingeführt wird.

17. Verfahren nach Anspruch 1, **dadurch gekennzeichnet, dass** das extrudierte Verbund-Gemisch zwischen einer oberen Papierauskleidung und einer unteren Papierauskleidung laminiert wird und damit eine laminierte Isolierbahn gebildet wird.

## Revendications

1. Méthode pour la préparation d'un produit en mousse de polymère thermodurcissable **caractérisée par** :
◆ l'introduction d'un polyol dans une vis d'une extrudeuse (4) ;
◆ l'introduction d'un isocyanate dans la vis de l'extrudeuse ;
◆ le mélange du polyol et de l'isocyanate dans la vis de l'extrudeuse ;
◆ l'introduction d'un agent moussant dans la vis de l'extrudeuse ;
◆ l'introduction d'un catalyseur dans l'extrudeuse en une position située à proximité de la tête d'extrusion de l'extrudeuse ;
◆ le mélange du catalyseur avec l'agent moussant, l'isocyanate et le polyol dans l'extrudeuse pour former un mélange composite, avec ainsi réaction de l'isocyanate et du polyol et initiation d'une réaction de moussage dans le mélange composite dans l'extrudeuse en relation avec l'extrusion, l'expansion du mélange composite en mousse se produisant à l'extérieur de l'extrudeuse.

2. Méthode selon la revendication 1, **caractérisée en outre par** l'introduction de particules de charge choisies dans le groupe incluant le trihydrate d'aluminium, la perlite, le noir de carbone, la terre à diatomées, les poudres de polyiso, le sulfate de baryum, le silicate de calcium et le carbonate de calcium dans la vis de l'extrudeuse pour leur inclusion dans le mélange composite.

3. Méthode selon la revendication 2, **caractérisée en outre par** le mélange des particules de charge avec l'isocyanate pour préparer un mélange particule/isocyanate avant l'introduction du mélange particule/isocyanate dans la vis de l'extrudeuse.

4. Méthode selon la revendication 2, **caractérisée en outre par** le mélange de noir de carbone finement divisé avec l'isocyanate et les particules de charge pour former un mélange carbone/particule/isocyanate avant l'introduction du mélange carbone/particule/isocyanate ainsi formé dans la vis de l'extrudeuse.

5. Méthode selon la revendication 1, **caractérisée en outre par** le mélange d'un tensioactif avec le polyol pour préparer un mélange tensioactif/polyol avant l'introduction du mélange tensioactif/polyol ainsi formé dans la vis de l'extrudeuse.

6. Méthode selon la revendication 5, **caractérisée en outre par** le mélange d'un agent dispersant avec le polyol et le tensioactif pour préparer un mélange agent dispersant/tensioactif/polyol avant l'introduction du mélange agent dispersant/ tensioactif/polyol ainsi formé dans la vis de l'extrudeuse.

7. Méthode selon la revendication 2, **caractérisée en ce que** l'on mélange du noir de carbone finement divisé avec les particules de charge pour former un mélange particules de charge/noir de carbone avant l'introduction du mélange particules de charge/noir de carbone dans la vis de l'extrudeuse.

8. Méthode selon la revendication 1, **caractérisée en ce que** l'agent moussant est choisi dans le groupe constitué par un hydrochlorofluorocarbone (HCFC), HC, HFC, CFC et l'eau.

9. Méthode selon la revendication 8, **caractérisée en ce que** l'agent moussant est constitué par de l'eau et HCFC.

10. Méthode selon la revendication 2, **caractérisée en ce que** les dites particules de charge constituent au moins 12 % en masse de ladite mousse de polymère thermodurcie.

11. Méthode selon la revendication 2, **caractérisée en ce que** lesdites particules de charge comprennent 15-50 % en masse de ladite mousse de polymère thermodurcie.

12. Méthode selon la revendication 2, **caractérisée en ce que** lesdites particules de charge sont introduites en une première position dans l'extrudeuse, un pré-mélange dudit polyol et d'un tensioactif est mélangé avec lesdites particules de charge en une seconde position dans l'extrudeuse, une quantité supplémentaire de polyol est mélangée en une troisième position dans l'extrudeuse en aval de ladite seconde position, ledit isocyanate est introduit en une quatrième position dans l'extrudeuse en aval de la troisième position, ledit agent moussant est introduit en une cinquième position dans l'extrudeuse en aval de la quatrième position et ledit catalyseur est introduit en une sixième position dans l'extru-deuse en aval de ladite cinquième position.

13. Méthode selon la revendication 2, **caractérisée en ce que** ledit polyol et lesdites particules de charge sont ajoutés en une première position de l'extru-deuse, ledit isocyanate est ajouté en une seconde position de l'extrudeuse, en aval de la première position, ledit agent moussant est ajouté dans l'extrudeuse en une troisième position, en aval de la deuxième position, et ledit catalyseur est ajouté aux polyols, particules de charge, isocyanate et agent moussant mélangés en une quatrième position de l'extrudeuse à proximité de la filière d'extrusion pour former un mélange catalysé, le mélange catalysé ainsi formé étant extrudé pour fournir de la mousse.

14. Méthode selon la revendication 1, **caractérisée par** le refroidissement du mélange composite avant son extrusion pour maintenir la température au-dessous de 50°C.

15. Méthode selon la revendication 1, **caractérisée en ce que** l'extrudeuse est une extrudeuse à deux vis et fonctionne à 300-600 tours par minute.

16. Méthode selon la revendication 1, dans laquelle le catalyseur est introduit dans un cylindre (A12) de l'extrudeuse adjacent à la tête de l'extrudeuse (A46).

17. Méthode selon la revendication 1, **caractérisée en outre par** l'étape de stratification du mélange composite extrudé entre une doublure de papier supérieure et une doublure de papier inférieure avec ainsi formation d'une feuille d'isolation stratifiée.
